# EUROPÄISCHE PATENTANMELDUNG

(11) **EP 3 586 587 A1**
(43) Veröffentlichungstag der Anmeldung: **01.01.2020**
(21) Anmeldenummer: 19176964.5
(22) Anmeldetag: 28.05.2019
(51) Int. Cl.: A01D 17/10, A01D 33/08

(54) **UMLENKVORRICHTUNG FÜR ERNTEGUT**

(30) Priorität: 29.06.2018 DE 202018103716 U
(71) Anmelder: Grimme Landmaschinenfabrik GmbH & Co. KG, 49401 Damme (DE)
(72) Erfinder: Bellersen, Werner, 49393 Lohne (DE); Dettmer, Franz-Josef, 49577 Ankum (DE)
(74) Vertreter: Wischmeyer, André

(57) **Zusammenfassung**

Umlenkvorrichtung (2) für Erntegut, insbesondere aus Hackfrüchten und Beimengungen, umfassend zumindest ein im Betrieb abschnittsweise in einer Förderebene (4) und in eine Förderrichtung (6) verlaufendes, vorzugsweise als Förderband ausgebildetes Förderelement (8) zur Förderung von darauf aufliegendem Erntegut und zumindest ein im Betrieb zumindest abschnittsweise um eine erste Umlenkrotationsachse (10), die relativ zur Förderrichtung (6) um einen Umlenkwinkel (α) von < 90° angewinkelt ist, umlaufendes und insbesondere als rotierende erste Umlenkwalze ausgebildetes erstes Umlenkelement (12), das sich zumindest abschnittsweise quer über das Förderelement (8) erstreckt, und zumindest ein im Betrieb mit dem ersten Umlenkelement (12) einen Einzug für Beimengungen aus dem vom Förderelement (8) geförderten Erntegut ausbildendes weiteres Umlenkelement (14), das im Betrieb zumindest abschnittsweise um eine weitere Umlenkrotationsachse (16) umlaufend ausgebildet ist, wobei das weitere Umlenkelement (14) derart gelagert ist, dass die weitere Umlenkrotationsachse (16) im Betrieb zur Variation des Einzuges relativ zur ersten Umlenkrotationsachse (10) schwenkbar um eine dazu insbesondere parallel verlaufende Schwenkachse (18) ist, und Maschine zum Ernten, Reinigen oder Transportieren von Hackfrüchten, insbesondere Kartoffelerntemaschine (30).

## Beschreibung

Die Erfindung betrifft eine Umlenkvorrichtung für Erntegut, insbesondere aus Hackfrüchten und Beimengungen, umfassend zumindest ein im Betrieb abschnittsweise in einer Förderebene und in einer Förderrichtung verlaufendes Förderelement. Vorzugsweise ist dieses als Förderband ausgebildet und dient zur Förderung von darauf aufliegendem Erntegut. Die Umlenkvorrichtung umfasst außerdem zumindest ein im Betrieb zumindest abschnittsweise um eine erste Umlenkrotationsachse umlaufendes erstes Umlenkelement. Die erste Umlenkrotationsachse ist relativ zur Förderrichtung um einen Umlenkwinkel von < 90° angewinkelt. Das erste Umlenkelement ist insbesondere als im Betrieb rotierende erste Umlenkwalze ausgebildet. Das erste Umlenkelement erstreckt sich zumindest abschnittsweise quer über das Förderelement. Die Umlenkvorrichtung umfasst weiterhin zumindest ein im Betrieb mit dem ersten Umlenkelement einen Einzug für Beimengungen aus dem Erntegut, das vom Förderelement gefördert wird, ausbildendes weiteres Umlenkelement. Das weitere Umlenkelement läuft im Betrieb zumindest abschnittsweise um eine weitere Umlenkrotationsachse um.

Derartige Umlenkvorrichtungen sind insbesondere bekannt aus Erntemaschinen für Hackfrüchte wie Kartoffeln. Gemäß dem Stand der Technik wird das Erntegut, zu dem neben den Hackfrüchten auch Beimengungen gehören, durch das Förderelement in Richtung des ersten Umlenkelementes gefördert. Durch das im Betrieb umlaufende erste Umlenkelement, dessen erste Umlenkrotationsachse relativ zur Förderrichtung schräg angestellt ist, wird das Erntegut seitlich abgelenkt. Dadurch wird etwa erreicht, dass das Erntegut seitlich vom Förderelement hinunterverlagert wird. Nachteilig bei beschriebenen Umlenkvorrichtungen ist, dass diese zur Erreichung einer Umlenkung des Erntegutstroms einen großen Platz- und Energiebedarf haben, welche die Funktion weiterer Maschinenbestandteile beschränken.

Aufgabe der vorliegenden Erfindung ist es, eine Umlenkvorrichtung sowie eine Maschine damit bereitzustellen, deren Funktionalität zur Ermöglichung eines effizienteren Betriebes derer erhöht ist.

Erfindungsgemäß wird die Aufgabe durch eine derartige Lagerung des weiteren Umlenkelements gelöst, dass die weitere Umlenkrotationsachse im Betrieb zur Variation des Einzuges relativ zur ersten Umlenkrotationsachse schwenkbar um eine Schwenkachse ist. Die Schwenkachse verläuft insbesondere parallel zur ersten Umlenkrotationsachse.

Das Erntegut wird im Betrieb vom Förderelement auf die Umlenkelemente zu transportiert, wodurch insbesondere Hackfrüchte und im Erntegut enthaltene Beimengungen mit den Umlenkelementen in Kontakt kommen. Die benachbart zueinander angeordneten Umlenkelemente wirken derart zusammen, dass Beimengungen wie Krautteile, die im Bereich der Umlenkelemente vorliegen und insbesondere Kontakt dazu haben, zumindest teilweise davon eingezogen werden, wohingegen die Hackfrüchte konventionell umgelenkt werden. Dabei sind das erste und das weitere Umlenkelement insbesondere nicht gleichsinnig umlaufend. Somit gelangen durch die erfindungsgemäße Umlenkvorrichtung die im Erntegut unerwünschten Beimengungen bei einer Betrachtungsrichtung quer zur Förderebene auf die dem durch das Förderelement herangeführten Erntegut gegenüberliegende Seite der ersten Umlenkrotationsachse, wohingegen die Hackfrüchte auf der anderen, ersten Seite verbleiben und lediglich von der Förderrichtung abgelenkt werden. Durch diese Trennfunktion der Umlenkvorrichtung erfüllt sie zwei unterschiedliche Funktionen in nur einem Betriebsschritt. Dadurch kann die Umlenkvorrichtung und die Maschine zur Behandlung von Erntegut mit ihr wesentlich effizienter betrieben werden.

Das Förderelement ist dabei insbesondere als Siebband ausgebildet, um eine Abtrennung von kleinteiligen Beimengungen von den Hackfrüchten schon während des Transports in Förderrichtung zu ermöglichen. Diese kleinteiligen Beimengungen können beim Transport durch das Siebband hindurchfallen. Insbesondere liegt das Siebband um zumindest zwei in Förderrichtung voneinander beabstandete Umlenkrollen um. Die Umlenkrollen haben vorzugsweise einen konstanten Abstand zueinander und sind insbesondere an einem Umlenkvorrichtungsrahmen gelagert. Alternativ zum Siebband ist das Förderelement als Walzen- oder Siebsterntisch oder als geschlossenes Förderband ausgebildet.

Das Förderelement verläuft im Betrieb mit der Seite, auf welcher das Erntegut aufliegt, zumindest abschnittsweise in der Förderebene, zu der die Förderrichtung vorzugsweise zumindest im Bereich des ersten Umlenkelementes parallel ist. Insbesondere haben Siebstäbe des potentiell als Siebband ausgebildeten Förderelementes im Bereich des Umlenkelementes ihre Längserstreckung in der Förderebene. Insbesondere ist das Förderelement als Igelband, einem Siebband mit sich nach außen erstreckenden nachgiebigen Fingern, ausgebildet. Diese Finger haben insbesondere eine Länge von bis zu 5 cm und tragen das Erntegut im Betrieb zumindest teilweise. In dieser Ausgestaltung werden die Finger insbesondere im Bereich des ersten Umlenkelementes von der gedachten Förderebene geschnitten. Die Finger bewirken, dass sich insbesondere Kraut als vom Erntegut zu trennende Beimengung darin verfängt und dadurch vom Förderelement unter den Umlenkelementen hindurch transportiert und nicht davon umgelenkt wird.

Das erste Umlenkelement ist insbesondere als erste Umlenkwalze ausgebildet, welche bevorzugt im Wesentlichen zylinderförmig mit einen einheitlichen Durchmesser entlang ihrer axialen Erstreckung ausgebildet ist. In einer weiteren vorteilhaften Ausgestaltung der Erfindung ist das erste Umlenkelement im Wesentlichen kegelstupfförmig ausgebildet. Alternativ ist das erste Umlenkelement ein Förderband, welches von einer um die erste Umlenkrotationsachse rotierende Umlenkrolle umgelenkt wird. Wiederum alternativ ist das erste Umlenkelement als im Betrieb umlaufender Kratzboden ausgebildet.

Die erste Umlenkrotationsachse ist insbesondere parallel zur Förderebene, wodurch vorzugsweise die erste Umlenkwalze einen konstanten Abstand zur Förderebene hat bzw. im Betrieb mit einer konstanten Tiefe darin eintaucht. Das erste Umlenkelement erstreckt sich bevorzugt über die gesamte Breite des Förderelementes.

Das weitere Umlenkelement hat insbesondere eine zur ersten Umlenkrotationsachse parallele Haupterstreckungsrichtung. Das weitere Umlenkelement liegt im Betrieb zumindest in einer Ausgangsstellung am ersten Umlenkelement an oder ist geringfügig davon beabstandet. Im Betrieb ist das erste Umlenkelement derart umlaufend, dass die Bewegungsrichtung des dem weiteren Umlenkelement zugewandten Abschnittes anteilig mit der Förderrichtung zusammenfällt, um auf zumindest einen Teil der Beimengungen einen einziehenden Impuls auszuüben.

Der Umlenkwinkel der Umlenkvorrichtung, welcher durch die erste Umlenkrotationsachse und die Förderrichtung des Förderelementes definiert ist, ist insbesondere > 45°, bevorzugt in einem Bereich von > 55° und/oder < 80°. Dabei ist der Umlenkwinkel insbesondere im Betrieb vorzugsweise gestuft oder stufenlos verstellbar.

Das Förderelement ist insbesondere ungleich dem weiteren Umlenkelement. Bevorzugt ist dabei das erste Umlenkelement zumindest abschnittsweise zwischen dem weiteren Umlenkelement und dem Förderelement angeordnet.

Das erste und das weitere Umlenkelement sind bevorzugt in einer ein- oder mehrteiligen Umlenklagereinrichtung gelagert. Die Umlenklagereinrichtung ist insbesondere am Umlenkvorrichtungsrahmen abgestützt und vorzugsweise zumindest teilweise ortsfest dazu angeordnet. Die Umlenklagereinrichtung mit den Umlenkelementen ist bevorzugt vom Rest der Umlenkvorrichtung trennbar und/oder insbesondere ihre Position relativ zum Umlenkvorrichtungsrahmen vorzugsweise zur Variation des Umlenkwinkels verstellbar. Dazu ist bevorzugt zumindest eine Umlenklagereinheit mittelbar oder unmittelbar schwenkbeweglich gegenüber dem Umlenkvorrichtungsrahmen abgestützt.

Das weitere Umlenkelement ist im Betrieb zumindest abschnittsweise um eine weitere Umlenkrotationsachse umlaufend ausgebildet. Insbesondere sind dabei das erste und das weitere Umlenkelement als im Betrieb gegensinnig umlaufend ausgebildet. Vorzugsweise haben dabei die erste und die weitere Umlenkrotationsachse unterschiedliche Abstände von der Förderebene und erstrecken sich insbesondere parallel zueinander. Durch den Umlauf des weiteren Umlenkelementes erzeugt dieses eine Durchmischung des umgelenkten Erntegutes, wodurch ein größerer Anteil der Beimengungen in den Bereich des gebildeten Einzugs gelangt und eingezogen werden kann. Bei einem gegensinnigen Umlauf der Umlenkelemente erzeugen beide einen Bewegungsimpuls in Richtung eines Bereichs zwischen ihnen auf die Beimengungen, wodurch die Trennwirkung deutlich verbessert wird.

Besonders bevorzugt ist das weitere Umlenkelement als im Betrieb rotierende, weitere Umlenkwalze ausgebildet. Insbesondere haben das erste und/oder das weitere Umlenkelement eine axiale Erstreckung, durch die sie sich über die gesamte Breite des Förderelementes erstrecken. Insbesondere haben das erste und das weitere Umlenkelement den gleichen Durchmesser und/oder sind vorzugsweise identisch ausgestaltet. Dadurch können beide Umlenkelemente einen bestmöglichen Anteil zur Trennwirkung beitragen und Beimengungen unter gegenseitiger Unterstützung einziehen. Außerdem ist die konstruktive Ausgestaltung und damit Zuverlässigkeit der Trennfunktion somit verbessert.

Vorzugsweise hat die Umlenkvorrichtung zumindest ein Übertragungselement, welches im Betrieb betragsmäßig unterschiedliche Drehzahlen oder Umfangsgeschwindigkeiten von dem ersten Umlenkelement und dem weiteren Umlenkelement vorgibt. Das Übertragungselement ist bevorzugt ausgebildet als mechanisches Übersetzungselement oder als Regler, durch den zumindest der Antrieb eines der Umlenkelemente veränderbar vorzugsweise durch Änderung eines Stroms oder eines Hydraulikmittelstroms ist. Das Übertragungselement ist so ausgebildet, dass dadurch unterschiedliche Drehzahlen oder Umfangsgeschwindigkeiten einstellbar sind, jedoch bevorzugt auch gleiche Drehzahlen oder Umfangsgeschwindigkeiten einstellbar sind.

Bei um einen Übersetzungsfaktor voneinander abweichenden Drehzahlen oder Umfangsgeschwindigkeiten sind erstes und weiteres Umlenkelement insbesondere mechanisch gekoppelt und durch nur ein Antriebselement antreibbar. Durch die unterschiedlichen Umfangsgeschwindigkeiten der Umlenkelemente insbesondere in ihrem jeweiligen einander zugewandten Umfangsbereich oder die unterschiedlichen Drehzahlen insbesondere bei gleichen Durchmessern der Umlenkelemente sorgen für ein gegenseitiges Abreiben von Ablagerungen auf ihren Oberflächen, die durch ein reines Abrollen nicht erreicht würde und wodurch die Trennwirkung langfristig gewährleistet ist. Insbesondere sind die Drehzahlen bzw. Umfangsgeschwindigkeiten der beiden Umlenkelemente und insbesondere deren Verhältnis zueinander unterschiedlich einstellbar, um die vorbeschriebene Wirkung erreichen zu können und die Umlenkvorrichtung gleichzeitig an unterschiedliche Bedingungen anpassen zu können. Insbesondere ist lediglich eine der Drehzahlen bzw. Umfangsgeschwindigkeiten veränderbar. Die Drehzahlen oder Umfangsgeschwindigkeiten sind dabei stufenlos oder gestuft und insbesondere auch im Betrieb der Umlenkvorrichtung veränderbar.

Zumindest ein Umlenkelement wird im Betrieb insbesondere angetrieben durch zumindest einen Hydraulikmotor, der in axialer Richtung an das Umlenkelement angrenzt. Der Hydraulikmotor wird dabei im Betrieb der Umlenkvorrichtung insbesondere durch eine Hydraulikversorgung der Maschine, von der die Umlenkvorrichtung ein Teil ist, mit Hydraulikmittel versorgt. Alternativ oder ergänzend wird zumindest ein Umlenkelement durch ein Übertragungselement oder einen Riemen oder ein Zahnrad durch ein anderes Umlenkelement bzw. einen daran angeordneten Hydraulikmotor angetrieben.

Das weitere Umlenkelement ist derart gelagert, dass die weitere Umlenkrotationsachse im Betrieb zur Variation des Einzugs relativ zur ersten Umlenkrotationsachse beweglich ist. Dadurch kann im Betrieb zumindest lokal ein Abstand zwischen der ersten und der weiteren Umlenkrotationsachse erzeugt werden. Dabei ist die weitere Umlenkrotationsachse gegenüber der ersten Umlenkrotationsachse erfindungsgemäß schwenkbar. Durch die Möglichkeit der Bewegung der Umlenkelemente relativ zueinander kann ungeachtet etwaiger Rotationen zumindest in einzelnen Bereichen zwischen ihnen ein Spalt entstehen oder vergrößert werden, durch den eingezogene Beimengungen hindurchbewegt werden können. Insbesondere wird eine Bewegung des weiteren Umlenkelementes im Betrieb durch zwischen dem ersten und dem weiteren Umlenkelement hindurchtretenden Beimengungen ausgelöst, wobei erstes und weiteres Umlenkelement bei Nichtvorhandensein von Beimengungen einen minimalen Abstand zueinander haben. Dadurch hat der etwaige Einzugsspalt eine minimal mögliche Weite, wodurch die Umlenkvorrichtung ihre Trennwirkung besonders zuverlässig entfaltet, und bietet die Umlenkvorrichtung zum anderen die Möglichkeit der einfachen und energiesparenden Abförderung der Beimengungen.

Vorzugsweise ist das erste Umlenkelement durch eine erste Umlenklagereinheit und das weitere Umlenkelement durch eine weitere Umlenklagereinheit gelagert, wobei das erste und das weitere Umlenklagerelement von der Umlenklagereinrichtung umfasst werden. Die erste Umlenklagereinheit ist bei unverändertem Umlenkwinkel insbesondere ortsfest relativ zum Umlenkvorrichtungsrahmen angeordnet, wobei die weitere Umlenklagereinheit zur Ermöglichung einer Relativbewegung der Umlenkrotationsachsen zueinander, insbesondere über ein Gleitlager schwenkbeweglich mit der ersten Umlenklagereinheit verbunden ist.

Die unterschiedlichen Teile zumindest einer Umlenklagereinheit befinden sich bevorzugt auf unterschiedlichen Seiten des Förderelementes. Bei Betrachtung der Umlenkvorrichtung in Förderrichtung sind die Teile der Umlenklagereinheit insbesondere nicht unmittelbar über, sondern seitlich versetzt von dem Förderelement und insbesondere oberhalb der Förderebene angeordnet.

Zumindest eine der Umlenklagereinheiten ist bevorzugt zweiteilig ausgebildet. Dabei weist oder weisen das eine dadurch gelagerte Umlenkelement bzw. die davon gelagerten Umlenkelemente jeweils insbesondere zwei axial beabstandete Lagerabschnitte auf, die je an einen Teil der betreffenden Umlenklagereinheit, vorzugsweise mittelbar über ein Gleit- oder Kugellager, angrenzen. Die beiden Teile der zumindest einen Umlenklagereinheit erstrecken sich relativ zur Umlenkrotationsachse des gelagerten Umlenkelementes insbesondere hauptsächlich radial, wobei sie insbesondere gleichförmig sind.

Bevorzugt ist das weitere Umlenkelement derart gelagert, dass die weitere Umlenkrotationsachse relativ zur ersten Umlenkrotationsachse schwenkbar um eine dazu insbesondere parallel verlaufende Schwenkachse ist. Dazu ist das weitere Umlenkelement insbesondere in einem Schwenkrahmen gelagert, welcher relativ zu einem zur ersten Umlenkrotationsachse ortsfesten Rahmen der Umlenkvorrichtung schwenkbeweglich gelagert ist. Eine etwaige Rotation des weiteren Umlenkelementes ist dabei separat von einer Verschwenkung des Schwenkrahmens mit dem weiteren Umlenkelement zu betrachten. Durch diese besonders einfache Umsetzung der Möglichkeit einer Relativbewegung zwischen erstem und weiterem Umlenkelement ist die Trennfunktion besonders zuverlässig erreicht.

Die Schwenkachse ist insbesondere parallel zur ersten Umlenkrotationsachse angeordnet und fällt nicht mit dieser zusammen. Die Schwenkachse ist vorzugsweise in Förderrichtung hinter der ersten Umlenkrotationsachse angeordnet und hat insbesondere im Bereich des Förderelementes einen geringeren Abstand zur Förderebene als die weitere Umlenkrotationsachse. Dabei ist die Schwenkachse insofern bei Perspektive in Förderrichtung hinter der ersten Umlenkrotationsachse angeordnet, als dass durch das Förderelement in Förderrichtung gefördertes Erntegut insbesondere in Förderrichtung einen geringeren Abstand von der ersten Umlenkrotationsachse als von der Schwenkachse hat. Ein Abschnitt des Förderelementes passiert somit im Betrieb die Schwenkachse zeitlich nach der ersten Umlenkrotationsachse. Insbesondere ist die erste Umlenkrotationsachse relativ zu einem Maschinenrahmen ortsfest angeordnet und befindet sich zumindest abschnittsweise zwischen weiterem Umlenkelement und dem Förderelement.

Besonders bevorzugt umfasst die Umlenkvorrichtung zumindest drei Umlenkelemente. Dabei fällt im Betrieb insbesondere die Bewegungsrichtung eines dem Förderelement zugewandten Oberflächenabschnittes des dem Förderelement nächsten Umlenkelementes anteilig mit der Förderrichtung zusammen. Insbesondere bilden dabei die beiden weiter von dem Förderelement beabstandeten Umlenkelemente, als erstes und weiteres Umlenkelement, einen Einzug aus. Das dem Förderelement nächste Umlenkelement, also das unmittelbar darüber angeordnete, rotiert derart, dass es zumindest anteilig auf dem umlaufenden Förderelement abrollt und somit gemeinsam mit dem Förderelement einen weiteren Einzug ausbildet.

In einer vorteilhaften Ausgestaltung der Erfindung hat die Umlenkvorrichtung zumindest vier Umlenkelemente, die zumindest zwei Einzüge ausbildend angeordnet sind. Dabei umfasst die Umlenkvorrichtung je zwei erste und weitere Umlenkelemente, welche ausgehend von der Förderebene abwechselnd übereinander angeordnet sind.

Die Erhöhung der Anzahl von Umlenkelementen bewirkt eine zuverlässigere Umlenkung der Hackfrüchte und ermöglicht die Ausbildung einer Mehrzahl von Einzügen, die somit auf unterschiedlichen Höhen relativ zur Förderebene Beimengungen aus dem Erntegut einziehen, wodurch die Trennwirkung verbessert ist.

Mit Vorteil sind Umlenkelemente, welche nicht miteinander einen Einzug ausbilden, insofern mechanisch insbesondere durch einen Riemen oder eine Zahnradstufe gekoppelt, als dass ihre Drehzahlen unmittelbar voneinander abhängen oder gleich sind, wodurch der gleiche Antrieb für eine Mehrzahl von Umlenkelementen genutzt werden kann.

Vorzugsweise sind durch eine Umlenklagereinheit mehrere Umlenkelemente gelagert. Deren Umlenkrotationsachsen sind insbesondere nicht zueinander beweglich. Dabei ist jeder Umlenklagereinheit bevorzugt eine Antriebseinrichtung wie ein Hydraulikmotor zugeordnet.

Bevorzugt umfasst die Umlenkvorrichtung zumindest ein dem ersten oder dem weiteren Umlenkelement zugeordnetes Abstreifelement, das im Betrieb relativ zum jeweiligen Umlenkelement insbesondere gegensinnig rotierend ausgebildet ist. Das Abstreifelement dient dazu, Ablagerungen auf den Oberflächen der Umlenkelemente abzustreifen bzw. deren Dicke oder Stärke zu begrenzen. Dadurch wird die Trennfunktion der Umlenkvorrichtung dauerhaft sichergestellt. Das Abstreifelement kann dabei als Walze ausgebildet sein, die sich parallel erstreckend in unmittelbarer Nähe zum jeweiligen Umlenkelement angeordnet ist. Alternativ hat das Abstreifelement die Form eines zur Umlenkrotationsachse des jeweiligen Umlenkelementes ortsfesten Abstreifelementes, das nicht umläuft. Das Abstreifelement ist insbesondere auf der von dem durch das Förderelement zu den Umlenkelementen geförderten Erntegut abgewandten Seite des jeweiligen Umlenkelementes angeordnet.

Bevorzugt verlaufen die Umlenkrotationsachsen der Umlenkelemente der Umlenkvorrichtung in einer Umlenkebene. Die Umlenkebene ist relativ zur Förderebene besonders bevorzugt um weniger als 90°, bevorzugt um weniger als 80°, besonders bevorzugt um weniger als 70°, verschwenkt und im Betrieb insbesondere vom geförderten Erntegut weggeneigt. Insbesondere ist die Umlenkebene relativ zur Förderebene um eine zur ersten Umlenkrotationsachse parallele Achse verschwenkt. Dabei sind die Umlenkelemente, welche gegenüber anderen weiter von der Förderebene beabstandet sind, auch in Förderrichtung weiter vorne angeordnet. Durch diesen Aufbau der Umlenkvorrichtung können die Hackfrüchte besonders schonend umgelenkt und die Beimengungen aus einem besonders großen Zugriffsbereich eingezogen werden.

Alternativ sind die Umlenkrotationsachsen in einer zu einer Umlenkrotationsachse senkrechten Betrachtungsebene bevorzugt entlang einer zumindest abschnittsweise um das im Betrieb geförderte Erntegut gewinkelten oder gekrümmten Linie angeordnet. Besonders bevorzugt sind die Umlenkrotationsachsen in der Betrachtungsebene entlang eines gedachten Kreisbogens angeordnet. Somit ist wiederum zumindest ein gegenüber einem anderen weiter von dem Förderelement beabstandetes Umlenkelement auch in Förderrichtung weiter vorne angeordnet. Die Umlenkelemente bilden eine von dem herangeförderten Erntegut weg gewölbte Umlenkfläche, wodurch wiederum beide Funktionen der Umlenkvorrichtung besonders vorteilhaft erreicht werden können.

In einer anderen Ausgestaltung der Umlenkvorrichtung ist das weitere Umlenkelement im Betrieb nicht umlaufend. Dabei ist das weitere Umlenkelement ortsfest relativ zur ersten Umlenkrotationsachse oder von einer Umlaufbewegung abweichend beweglich gelagert. Insbesondere hat das weitere Umlenkelement dabei die Form einer Leit- bzw. Umlenkwandung. Der Bewegungsimpuls zum Einzug der Beimengungen geht in dieser Ausgestaltungsform zumindest überwiegend von dem ersten Umlenkelement aus, womit das weitere Umlenkelement als passiver Einzugspartner ausgebildet ist. Durch diese Ausgestaltung ist die Anzahl von verschleißbehafteten Bauteilen der Umlenkvorrichtung reduziert und deren Funktion dadurch dauerhaft gewährleistet.

Besonders bevorzugt ist das weitere Umlenkelement um eine insbesondere zur ersten Umlenkrotationsachse parallele Schwenkachse schwenkbeweglich. Alternativ oder ergänzend ist das weitere Umlenkelement gegenüber der ersten Umlenkrotationsachse verschieblich angeordnet. Dadurch ist zwischen erstem und weiterem Umlenkelement ein Einzugsspalt zu erzeugen bzw. dessen Größe variabel, um eingezogene Beimengungen zwischen den Umlenkelementen hindurchführen zu können und trotzdem beim Einzug eine optimale Zusammenwirkung zwischen den Umlenk-elementen zu bewirken. Darüber hinaus erfüllt das weitere Umlenkelement auch die Umlenkfunktion für die Hackfrüchte, insbesondere ohne diese durch den etwaigen Einzugsspalt hindurchtreten zu lassen.

In einer vorteilhaften Ausgestaltung der Erfindung bzw. der Umlenkvorrichtung ist dem weiteren Umlenkelement, unabhängig davon, ob im Betrieb rotierend oder nicht, ein Rückstellelement zugeordnet. Das Rückstellelement beaufschlagt das weitere Umlenkelement bzw. den Rahmen, innerhalb dessen das weitere Umlenkelement gelagert ist, mit einer Rückstellkraft in Richtung des ersten Umlenkelementes. Diese wirkt einer Öffnung des Einzugsspaltes entgegen und führt die Umlenkelemente ggf. aufeinander zu. Da-durch wird zumindest bei Abwesenheit von Beimengungen zwischen den Umlenk-elementen die Ausgangsstellung der Umlenkvorrichtung hergestellt, in der die Umlenkelemente zur Ausbildung des Einzugs und zur Umlenkung der Hackfrüchte optimal zusammenwirken.

Vorzugsweise ist das Rückstellelement als Feder ausgebildet, deren Federkonstante insbesondere variabel einstellbar ist. Die Feder ist bevorzugt zum einen an der ersten Umlenklagereinheit und zum anderen an der weiteren Umlenklagereinheit angeordnet. Dazu haben die Umlenklagereinheiten oder deren Teile bevorzugt Befestigungslaschen. Insbesondere sind diese Laschen ebenso wie die Feder in Förderrichtung zumindest teilweise hinter den Umlenkelementen angeordnet. Alternativ ist die Feder bevorzugt an einem der Umlenkelemente und am Umlenkvorrichtungsrahmen angeordnet. Alternativ zum Rückstellelement ist die Umlenkvorrichtung dergestalt ausgebildet, dass die Ausgangsstellung schwerkraftinduziert durch die Gewichtskraft des weiteren Umlenkelementes eingestellt wird.

Vorzugsweise umfasst die Umlenkvorrichtung einen im Betrieb die Größe des Einzugsspaltes zwischen dem ersten und dem weiteren Umlenkelement begrenzenden Anschlag. Dieser begrenzt eine Relativbewegung zwischen den Umlenkelementen bzw. deren Umlenkrotationsachsen oder deren Umlenklagereinheit dergestalt, dass er eine maximale Weite des Einzugsspaltes zwischen ihnen definiert und keine weitere Bewegung der Umlenkelemente voneinander weg zulässt. Der Anschlag ist insbesondere ortsfest relativ zur ersten Umlenklagereinheit oder zum Umlenkvorrichtungsrahmen. Bevorzugt hat er durch ein steifes Anschlagselement ausgebildet, an welches zumindest ein Teil der weiteren Umlenklagereinheit bei Erreichen der maximal zulässigen Weite des Einzugsspaltes anstößt. Dadurch ist vermeidbar, dass Hackfrüchte, welche umzulenken sind, unbeabsichtigt durch den Einzugsspalt gelangen und somit mit den Beimengungen aussortiert werden. Insbesondere ist der Anschlag derart eingestellt, dass der Einzugsspalt eine maximale Weite von wenigen Zentimetern hat und einstellbar ist.

Bevorzugt sind das erste und/oder das weitere Umlenkelement aus mehreren Umlenkelementteilen ausgebildet, wobei die Umlenkelementteile insbesondere in Richtung der ersten bzw. weiteren Rotationsachse aneinander anschließen. Die Umlenkelementteile eines Umlenkelementes haben dabei unmittelbaren Kontakt zueinander oder nur einen geringfügigen Abstand zueinander. Durch die Trennung der Umlenkelemente in mehrere Umlenkelementteile lassen sich einzelne, lokale Einzugsspalte ausbilden, ohne dass etwa die Umlenkelemente gänzlich voneinander abheben. Damit können bereichsweise Beimengungen eingezogen werden, ohne die Umlenk- bzw. Einzugswirkung anderer Bereiche der Umlenkvorrichtung zu beeinflussen.

Vorzugsweise ist die im Betrieb das Erntegut kontaktierende Mantelfläche zumindest eines der Umlenkelemente zumindest bereichsweise durch ein elastisch nachgiebiges Material ausgebildet und weist insbesondere, vorzugsweise in radialer Richtung abstehende, Mitnehmer auf. Durch die weiche Struktur der Umlenkelemente können die Hackfrüchte zum einen schonender umgelenkt werden und lassen sich zum anderen die Beimengungen besser einziehen, da eine Kraft auf die Beimengungen entlang einer größeren Oberfläche darauf übertragen werden kann. Die Einzugswirkung wird darüber hinaus insofern durch die Mitnehmer gestützt, als dass diese insbesondere beim ersten Umlenkelement einen Bewegungsimpuls in tangentialer Richtung auf die Beimengungen ausüben und diese somit verstärkt in den Zwischenraum zwischen erstem und weiterem Umlenkelement fördern. Dadurch können beide Funktionen der Umlenkvorrichtung verbessert werden.

Alternativ ist zumindest ein Umlenkelement als Glattwalze ausgebildet, welche auch bei Rotation nur geringere Kräfte in Umlaufrichtung auf die Hackfrüchte ausübt, wodurch diese geschont werden.

Vorzugsweise hat zumindest eines der Umlenkelemente eine Mantelfläche, die zumindest abschnittsweise ein Gewinde ausbildet und im Betrieb die Hackfrüchte somit anteilig in axialer Richtung fördert. Insbesondere hat ein benachbartes Umlenkelement eine Mantelfläche mit einem zumindest abschnittsweise vorzugsweise korrespondierenden Gewinde. Zumindest eines der Umlenkelemente hat somit eine schneckenförmige, äußere Struktur mit zumindest einem umlaufenden Gewindegang, welcher bei Umlaufen des Umlenkelementes Impulse auf das Erntegut verursacht, welche zumindest anteilig in eine Richtung parallel zur jeweiligen Umlenkrotationsachse wirken. Dadurch wird die Umlenkfunktion der Umlenkvorrichtung unterstützt. Bei zwei benachbarten Umlenkelementen, welche jeweils schneckenförmig ausgebildet sind, ist zudem die Trennfunktion insofern verbessert, als dass die effektive Länge des potentiellen Einzugsspaltes aufgrund dessen nichtlinearen Erstreckung vergrößert ist. Dadurch ist die Angriffsfläche zum Einzug von Beimengungen erhöht.

Weiterhin wird die Aufgabe gelöst durch eine Maschine zum Ernten, Reinigen oder Transportieren von Hackfrüchten, insbesondere einer Kartoffelerntemaschine, mit einer vorbeschriebenen Umlenkvorrichtung. Die Umlenkvorrichtung ist insbesondere ein austauschbares Bauteil einer Erntemaschine und kann als Ganzes davon demontiert werden. Dazu ist insbesondere die Umlenkvorrichtung bzw. deren Umlenkvorrichtungsrahmen an einem Maschinenrahmen festzulegen und stützt sich somit im Betrieb daran ab. Der Maschine kommen die vor- und nachbeschriebenen Vorteile der erfindungsgemäßen Umlenkvorrichtung zu.

Weitere Einzelheiten und Vorteile der Erfindung sind in den nachfolgend beschriebenen, schematisch dargestellten Ausführungsbeispielen zu entnehmen; es zeigen:
- Fig. 1: eine teilweise Darstellung einer Kartoffelerntemaschine mit einer erfindungsgemäßen Umlenkvorrichtung in einer Seitenansicht,
- Fig. 2: die erfindungsgemäße Umlenkvorrichtung gemäß Fig. 1 in einer teilweise schematisch dargestellten Draufsicht,
- Fig. 3: eine weitere erfindungsgemäße Umlenkvorrichtung in einer Ausgangsstellung in einer schematisch dargestellten Seitenansicht,
- Fig. 4: die erfindungsgemäße Umlenkvorrichtung gemäß Fig. 3 in einer geöffneten Stellung in einer schematisch dargestellten Seitenansicht,
- Fig. 5: eine weitere Ausgestaltungsform der erfindungsgemäßen Umlenkvorrichtung in einer Seitenansicht,
- Fig. 6: die Umlenkvorrichtung gemäß Fig. 5 in einer perspektivischen Darstellung,
- Fig. 7: eine Detaildarstellung eines Bereichs der perspektivischen Darstellung gemäß Fig. 6,
- Fig. 8: eine erfindungsgemäße Anordnung der Umlenkelemente einer nicht vollständig dargestellten, erfindungsgemäßen Umlenkvorrichtung in einer schematischen, perspektivischen Darstellung,
- Fig. 9: die Umlenkelemente gemäß Fig. 8 in einer schematischen Draufsicht,
- Fig. 10: die Umlenkelemente gemäß Fig. 8 in einer schematischen Darstellung in einer Perspektive in Richtung der Umlenkrotationsachsen,
- Fig. 11: eine abweichende Anordnung der Umlenkelemente einer weiteren erfindungsgemäßen Umlenkvorrichtung in einer Perspektive parallel zu den Umlenkrotationsachsen, wobei die Umlenkvorrichtung schematisch und nicht vollständig dargestellt ist,
- Fig. 12: eine weitere abweichende Anordnung der Umlenkelemente einer weiteren erfindungsgemäßen Umlenkvorrichtung in einer Perspektive in Richtung der Umlenkrotationsachsen, wobei die Umlenkvorrichtung schematisch und nicht vollständig dargestellt ist.

Die nachfolgend erläuterten Merkmale der erfindungsgemäßen Ausführungsbeispiele können auch einzeln oder in anderen Kombinationen als dargestellt oder beschrieben Gegenstand der Erfindung sein, stets aber zumindest in Kombination mit den Merkmalen des Anspruchs 1. Sofern sinnvoll, sind funktional gleichwirkende Teile mit identischen Bezugsziffern versehen.

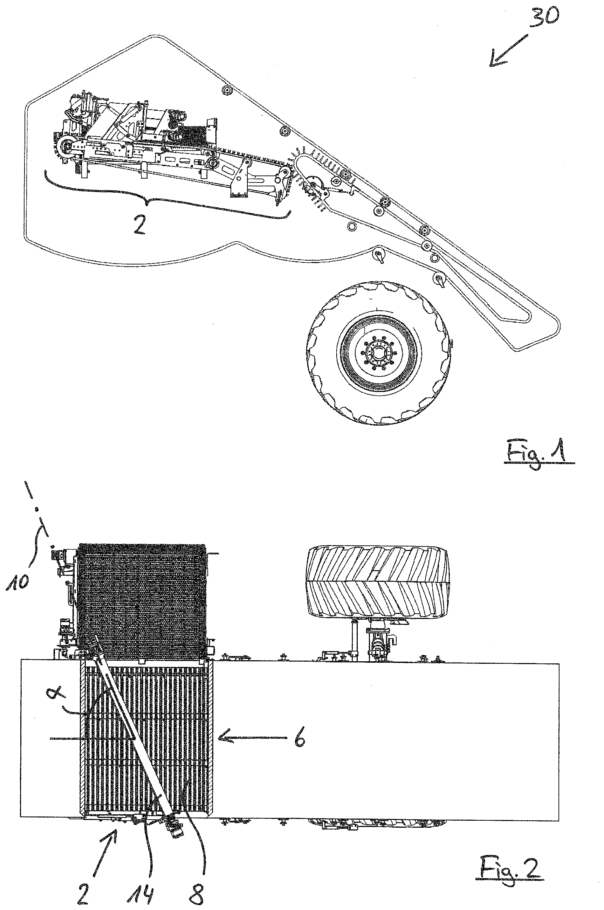

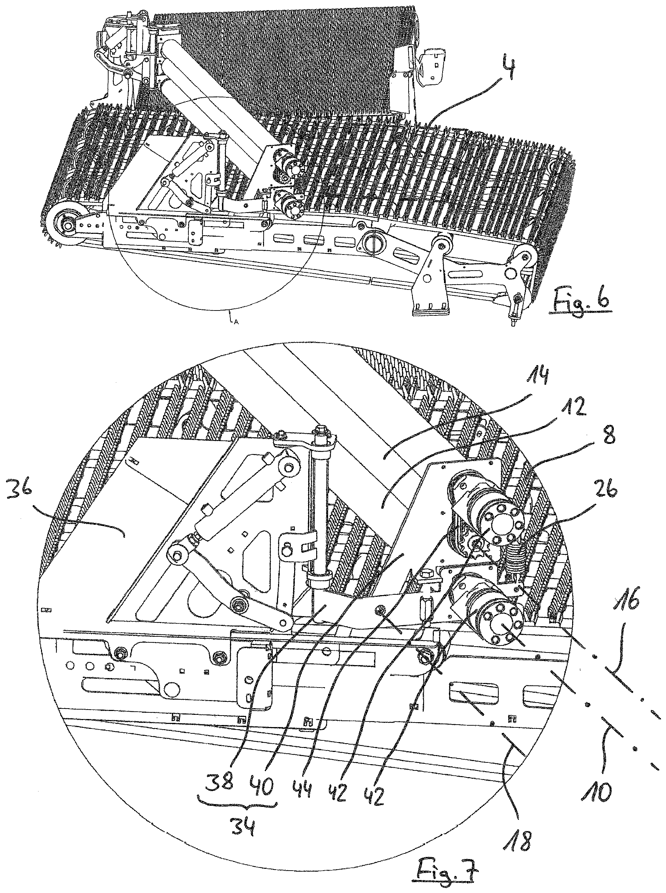

Fig. 1 ist eine teilweise und schematische Darstellung einer erfindungsgemäßen Kartoffelerntemaschine 30 mit einer erfindungsgemäßen Umlenkvorrichtung 2 für Erntegut, insbesondere aus Hackfrüchten und Beimengungen. Fig. 2 ist eine Draufsicht dieser Umlenkvorrichtung 2. Diese umfasst ein im Betrieb abschnittsweise in einer Förderebene 4 (vergl. Fig. 6) und in eine Förderrichtung 6 verlaufendes Förderelement 8, das als Förderband, im Einzelnen als Siebband, ausgebildet ist. Das Förderelement 8 dient zur Förderung von darauf aufliegendem Erntegut.

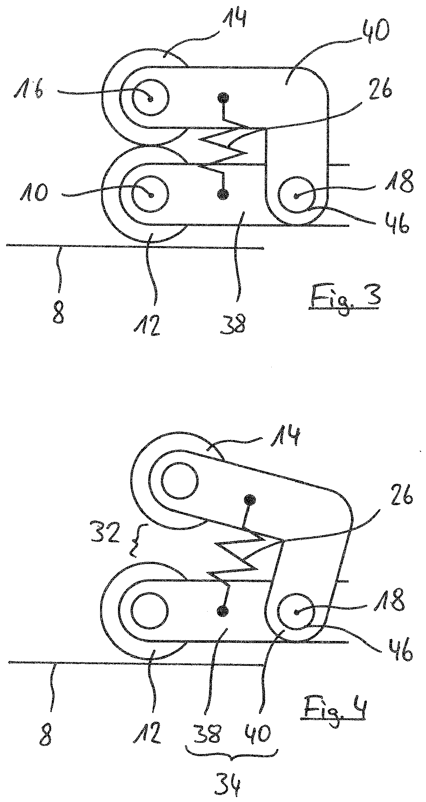

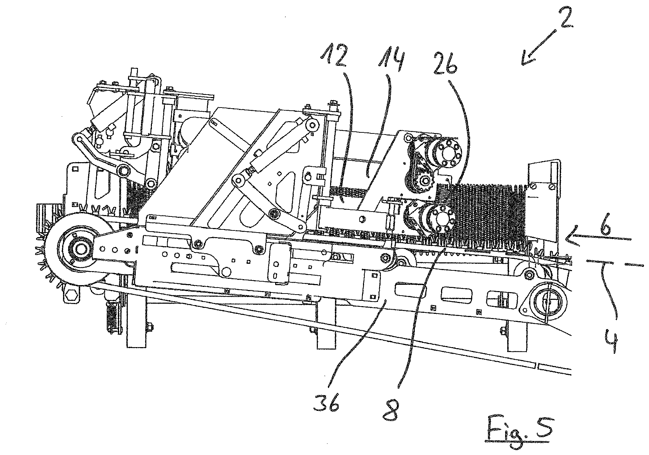

Die Umlenkvorrichtung 2 umfasst zumindest ein im Betrieb zumindest abschnittsweise um eine erste Umlenkrotationsachse 10 umlaufendes erstes Umlenkelement 12 (vergl. Fig. 3 und 7). Diese ist in den dargestellten Ausführungsbeispielen als erste Umlenkwalze ausgebildet. Die erste Umlenkrotationsachse 10 ist relativ zur Förderrichtung 6 um einen Umlenkwinkel α von < 90° angewinkelt (sh. Fig. 2). Das erste Umlenkelement 12 erstreckt sich quer über das Förderelement 8, wobei sich beide Elemente mittelbar an einem Umlenkvorrichtungsrahmen 36 (vgl. Fig. 5) abstützen.

Die Umlenkvorrichtung 2 hat ein weiteres Umlenkelement 14, das in den dargestellten Ausführungsbeispielen um eine weitere Umlenkrotationsachse 16 umlaufend ausgebildet ist und mit dem ersten Umlenkelement 12 einen Einzug für Beimengungen aus dem vom Förderelement 8 geförderten Erntegut ausbildet (vergl. schematische Darstellung in den Fig. 3 und 4). Dabei ist auch das weitere Umlenkelement 14 als Umlenkwalze ausgebildet. Die Umlenkelemente 12 und 14 sind zur gegenseitigen Unterstützung des Einzugs als im Betrieb gegensinnig umlaufend ausgebildet, wobei die Drehzahlen oder Umfangsgeschwindigkeiten der beiden Umlenkelemente 12, 14 betragsmäßig unterschiedlich oder unterschiedlich einstellbar sind. Das erste Umlenkelement 12 ist in einer ersten Umlenklagereinheit 38 und das weitere Umlenkelement 14 in einer weitere Umlenklagereinheit 40, wobei von beiden Umlenklagereinheiten je nur ein Bauteil schematisch dargestellt ist. Beide Umlenklagereinheiten 38, 40 gehören einer Umlenklagereinrichtung 34 an und sind zueinander durch ein dazwischen angeordnetes Gleitlager 46 schwenkbar.

Das weitere Umlenkelement 14 ist derart gelagert, dass die weitere Umlenkrotationsachse 16 relativ zur ersten Umlenkrotationsachse 12 schwenkbar um eine Schwenkachse 18 ist. Die Schwenkachse 18 verläuft dabei parallel zu den Umlenkrotationsachsen. Dadurch ist eine Beabstandung der in einer Ausgangsstellung einer Ausgestaltungsform aufeinander aufliegenden Umlenkelemente (vergl. Fig. 3) ermöglicht und somit ein Einzugsspalt 32 herzustellen (vergl. Fig. 4). Der Einzugsspalt 32 wird insbesondere dann aufgeweitet, wenn die gegensinnig betriebenen Umlenkelemente 12, 14 Beimengungen in ihren Zwischenraum bewegt haben.

Die Schwenkachse ist in Förderrichtung vor der ersten Umlenkrotationsachse 10 angeordnet und hat einen geringeren Abstand zur Förderebene 4 als die weitere Umlenkrotationsachse 16.

In der Ausgestaltungsform gemäß Fig. 5 liegen das erste Umlenkelement 12 und das weitere Umlenkelement 14 in der dargestellten Ausgangsstellung nicht unmittelbar aufeinander auf. Während das erste Umlenkelement 12 in dieser Ausgestaltungsform einzeln angetrieben ist, sind das weitere Umlenkelement 14 sowie ein drittes, darüber angeordnetes Umlenkelement gemeinsam angetrieben. Das Förderelement 8 ist in derselben Ausgestaltungsform (sh. auch Fig. 6) als Siebband mit sich nach außen erstreckenden Fingern ausgebildet, welches im Bereich der Umlenkelemente 12, 14 in der Förderebene 4 verläuft.

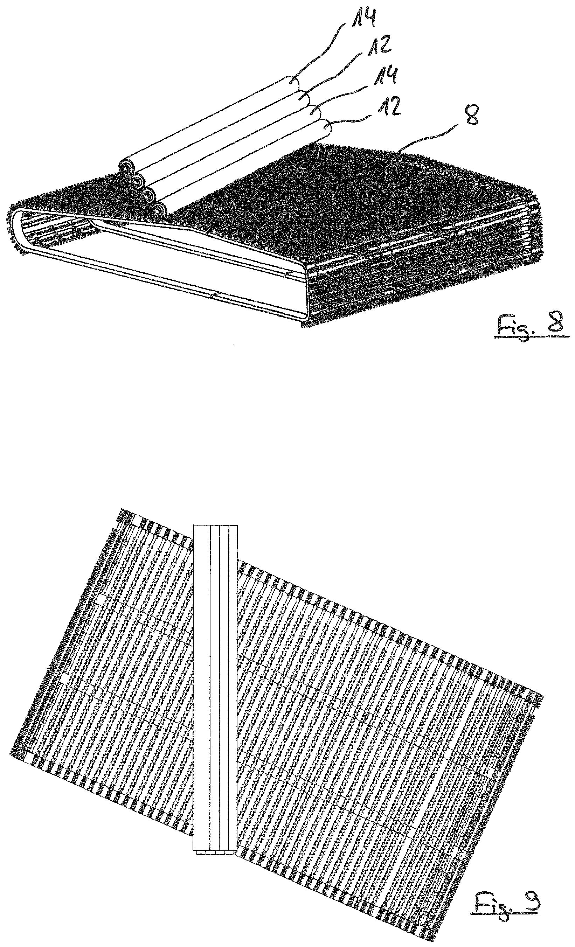

Fig. 8 zeigt schematisch Teile einer erfindungsgemäßen Umlenkvorrichtung 2, insbesondere ein Förderelement 8, von dem der Untertrum nur unvollständig dargestellt ist, und vier Umlenkelemente 12, 14. Dabei bilden je zwei Umlenkelementpaare aus je einem ersten und einem weiteren Umlenkelement 12, 14 je einen Einzug aus. Alternativ ließen sich die gezeigten Umlenkelemente 12, 14 derart antreiben, dass das untere, erste Umlenkelement 12 relativ zum Förderelement 8 gegensinnig rotierte, wohingegen lediglich die mittleren beiden Umlenkelemente einen erfindungsgemäßen Einzug ausbildeten.

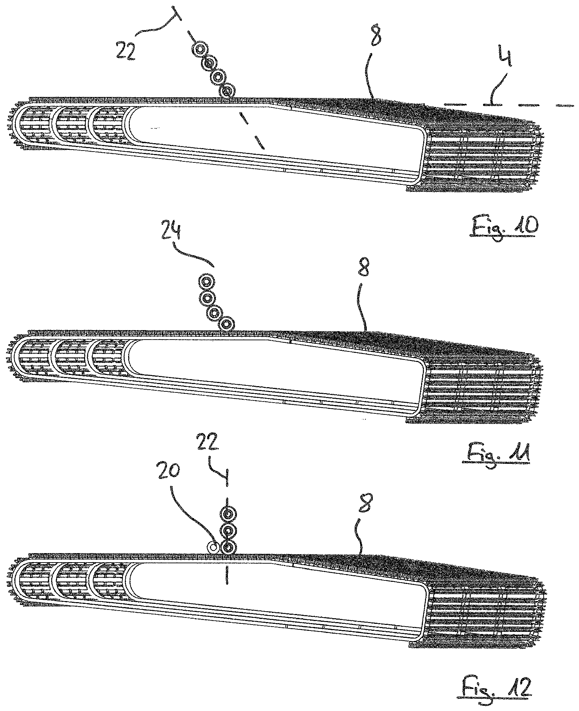

In der Ausgestaltungsform gemäß den Fig. 8 bis 10 liegen die Umlenkrotationsachsen 10, 16 der gezeigten Umlenkelemente 12, 14 in einer Umlenkebene, die relativ zur Förderebene 4 um < 90° verschwenkt ist. Dabei ist die Umlenkebene vom sich im Betrieb rechts davon befindlichen Erntegut weggeneigt (vergl. Fig. 10). Alternativ zur Umlenkebene 22 befinden sich die Umlenkrotationsachsen 10, 16 gemäß Fig. 11 entlang eines gedachten Kreisbogens 24. Wiederum alternativ ist die Umlenkebene 22 rechtwinklig zur Förderebene 4 positioniert (vergl. Fig. 12).

In der Ausgestaltungsform gemäß Fig. 5 weist die Umlenkvorrichtung ein Abstreifelement 20 auf, das im Betrieb gegenläufig zum unteren dargestellten Umlenkelement rotiert und Ablagerungen darauf abstreift.

Die gezeigten Ausführungsformen der Umlenkvorrichtung 2 zeigen ein Rückstellelement 26 zum Schließen oder verkleinern eines entstandenen Einzugsspaltes 32 (vergl. z. B. Fig. 4 und Fig. 7). Zusätzlich umfasst die schematisch dargestellte Umlenkvorrichtung gemäß Fig. 4 einen nicht dargestellten Anschlag zur Begrenzung einer maximalen Weite des Einzugsspaltes 32. Fig. 7 zeigt außerdem zwei Hydraulikmotoren 42, durch die je ein Umlenkelement 12, 14 unmittelbar angetrieben wird. Das dritte gezeigte Umlenkelement 12, 14 wird davon mittelbar über einen Riemen 44 angetrieben.

## Patentansprüche

1. Umlenkvorrichtung (2) für Erntegut, insbesondere aus Hackfrüchten und Beimengungen, umfassend zumindest ein im Betrieb abschnittsweise in einer Förderebene (4) und in eine Förderrichtung (6) verlaufendes, vorzugsweise als Förderband ausgebildetes Förderelement (8) zur Förderung von darauf aufliegendem Erntegut und zumindest ein im Betrieb zumindest abschnittsweise um eine erste Umlenkrotationsachse (10), die relativ zur Förderrichtung (6) um einen Umlenkwinkel (a) von < 90° angewinkelt ist, umlaufendes und insbesondere als rotierende erste Umlenkwalze ausgebildetes erstes Umlenkelement (12), das sich zumindest abschnittsweise quer über das Förderelement (8) erstreckt, und zumindest ein im Betrieb mit dem ersten Umlenkelement (12) einen Einzug für Beimengungen aus dem vom Förderelement (8) geförderten Erntegut ausbildendes weiteres Umlenkelement (14), das im Betrieb zumindest abschnittsweise um eine weitere Umlenkrotationsachse (16) umlaufend ausgebildet ist, **dadurch gekennzeichnet, dass** das weitere Umlenkelement (14) derart gelagert ist, dass die weitere Umlenkrotationsachse (16) im Betrieb zur Variation des Einzuges relativ zur ersten Umlenkrotationsachse (10) schwenkbar um eine dazu insbesondere parallel verlaufende Schwenkachse (18) ist.

2. Umlenkvorrichtung nach einem der vorhergehenden Ansprüche, **dadurch gekennzeichnet, dass** das weitere Umlenkelement (14) als im Betrieb rotierende, weitere Umlenkwalze ausgebildet ist.

3. Umlenkvorrichtung nach einem der vorhergehenden Ansprüche, **gekennzeichnet durch** ein im Betrieb betragsmäßig unterschiedliche Drehzahlen oder Umfangsgeschwindigkeiten von dem ersten Umlenkelement (12) und dem weiteren Umlenkelement (14) vorgebendes Übertragungselement.

4. Umlenkvorrichtung nach einem der vorhergehenden Ansprüche, **dadurch gekennzeichnet, dass** die Schwenkachse (18) in Förderrichtung (6) hinter der ersten Umlenkrotationsachse (10) angeordnet ist und insbesondere einen geringeren Abstand zur Förderebene (4) hat als die weitere Umlenkrotationsachse (16).

5. Umlenkvorrichtung nach einem der vorhergehenden Ansprüche, **gekennzeichnet durch** zumindest drei Umlenkelemente (12, 14), wobei im Betrieb insbesondere die Bewegungsrichtung eines dem Förderelement (8) zugewandten Oberflächenabschnittes des dem Förderelement (8) nächsten Umlenkelementes (12, 14) anteilig mit der Förderrichtung (6) zusammenfällt.

6. Umlenkvorrichtung nach einem der vorhergehenden Ansprüche, **gekennzeichnet durch** zumindest vier Umlenkelemente (12, 14), die zumindest zwei Einzüge ausbildend angeordnet sind.

7. Umlenkvorrichtung nach einem der vorhergehenden Ansprüche, **gekennzeichnet durch** zumindest ein dem ersten Umlenkelement (12) oder dem weiteren Umlenkelement (14) zugeordnetes Abstreifelement (20), das im Betrieb insbesondere relativ zum jeweiligen Umlenkelement (12, 14) gegensinnig rotierend ausgebildet ist.

8. Umlenkvorrichtung nach einem der vorhergehenden Ansprüche, **dadurch gekennzeichnet, dass** die Umlenkrotationsachsen (10, 16) in einer Umlenkebene (22) verlaufen, die relativ zur Förderebene (4) um < 90°, bevorzugt um < 80°, besonders bevorzugt um < 70° verschwenkt ist und im Betrieb insbesondere vom geförderten Erntegut weggeneigt ist.

9. Umlenkvorrichtung nach einem der vorhergehenden Ansprüche, **dadurch gekennzeichnet, dass** die Umlenkrotationsachsen (10, 16) in einer zu einer Umlenkrotationsachse (10, 16) senkrechten Betrachtungsebene entlang einer zumindest abschnittsweise um das im Betrieb geförderte Erntegut gewinkelten oder gekrümmten Linie, insbesondere entlang eines Kreisbogens (24), angeordnet sind.

10. Umlenkvorrichtung nach einem der vorhergehenden Ansprüche, **gekennzeichnet durch** zumindest ein dem weiteren Umlenkelement (14) zugeordnetes Rückstellelement (26).

11. Umlenkvorrichtung nach einem der vorhergehenden Ansprüche, **gekennzeichnet durch** einen im Betrieb die Größe eines Einzugsspaltes (32) zwischen erstem und weiterem Umlenkelement (12, 14) begrenzenden Anschlag.

12. Umlenkvorrichtung nach einem der vorhergehenden Ansprüche, **dadurch gekennzeichnet, dass** das erste und/oder das weitere Umlenkelement (12, 14) aus mehreren Umlenkelementteilen ausgebildet ist, wobei die Umlenkelementteile insbesondere in Richtung der ersten bzw. weiteren Umlenkrotationsachse (10, 16) aneinander anschließen.

13. Umlenkvorrichtung nach einem der vorhergehenden Ansprüche, **dadurch gekennzeichnet, dass** die im Betrieb das Erntegut kontaktierende Mantelfläche zumindest eines der Umlenkelemente (12, 14) zumindest bereichsweise durch ein elastisch nachgiebiges Material ausgebildet ist und insbesondere, vorzugsweise in radialer Richtung abstehende, Mitnehmer aufweist.

14. Umlenkvorrichtung nach einem der vorhergehenden Ansprüche, **dadurch gekennzeichnet, dass** zumindest eines der Umlenkelemente (12, 14) eine zumindest abschnittsweise ein Gewinde ausbildende Mantelfläche aufweist und insbesondere ein benachbartes Umlenkelement (12, 14) eine zumindest abschnittsweise ein vorzugsweise korrespondierendes Gewinde ausbildende Mantelfläche aufweist.

15. Maschine zum Ernten, Reinigen oder Transportieren von Hackfrüchten, insbesondere Kartoffelerntemaschine (30), mit einer Umlenkvorrichtung (2) nach einem der vorhergehenden Ansprüche.
